# EUROPEAN PATENT SPECIFICATION

(11) **EP 1 767 553 B1**
(45) Date of publication and mention of the grant of the patent: **21.12.2011**
(21) Application number: 05108850.8
(22) Date of filing: 26.09.2005
(51) Int. Cl.: C08F 220/36, C09K 19/38, C08G 18/67

(54) **UV-curable urethane-(meth)acrylate polymers**
UV-vernetzbare Urethan-(meth)acrylat Polymere
Polymères d'urethane-(meth)acrylate réticulable par UV

(43) Date of publication of application: 28.03.2007
(73) Proprietor: Dejima Tech bv, 6827 AV Arnhem (NL)
(72) Inventor: Erdhuisen, Erwin Wilhelmus Petrus, 6931 EC, Westervoort (NL)
(74) Representative: Beetz, Tom

(56) References cited:
- EP-A- 0 293 911
- EP-A- 0 868 680
- US-A- 5 308 535

## Description

The invention pertains to UV-curable urethane-(meth)acrylate polymers, to an optical film containing said urethane-(meth)acrylate polymers, and to a display containing said optical film.

Liquid crystalline displays comprising an active cell containing low-molecular weight liquid crystalline material and a retardation layer are well known in the art, said retardation layer comprising a high-molecular weight material layer and a substrate. Of particular interest are retardation layers that are disclosed in EP 868680 are often called "T-matched retardation film, and are commercially available under the trade name Twistar™. They contain a high-molecular weight material having at least above its Tg a nematic phase, and the difference of the Tc of the Twistar™ layer and the Tc of the low-molecular weight material of the display cell is in the range of -30° C to +30° C, and preferably less.

These retardation layers are typically made of a polyether obtainable by polymerizing a monomer mixture comprising:
a) an OH-containing compound, and
b) a mesogenic group-containing mono-epoxide.

The synthesis of these polymers is cumbersome and expensive. Since there is an increasing need for cheap displays, said expensive polyethers are practically too expensive and therefore T-matched displays cannot be used in low-cost applications. Thus there is a need for a more efficient method for making LC polyethers.

US 5, 308, 535 and EP 0 293 911 provide examples of liquid-crystalline polymers that are obtained by crosslinking polymers containing free OH-groups with a crosslinking agent capable of crosslinking these OH groups, for instance a diisocyanate. The obtained polymers are not UV-curable.

It has now been found that curable polyethers can easily be obtained by using diamine linkers and acrylate-ether pre-polymers by forming urethane bonds. The UV-curable urethane-(meth)acrylate polymers such obtained are cheap and the method allows obtaining a great number of polymers by selecting various building blocks. To this end the invention relates to a UV-curable urethane-(meth)acrylate polymer as defined in claim 1.

The UV-curable urethane-(meth)acrylates are synthesized in a two step process. The method comprises reacting 1) a simple hydroxyacrylate monomer (a) with a mesogenic group-containing mono-epoxide (b) to obtain a monoacrylate prepolymer (c), and 2) linking the monoacrylate prepolymer with a diisocyanate linker (d) to obtain the UV-curable urethane-(meth)acrylate polymer (e).

This reaction can be illustrated by the example of the following scheme, wherein R is H or CH₃ and R1 is a moiety containing a mesogenic group.

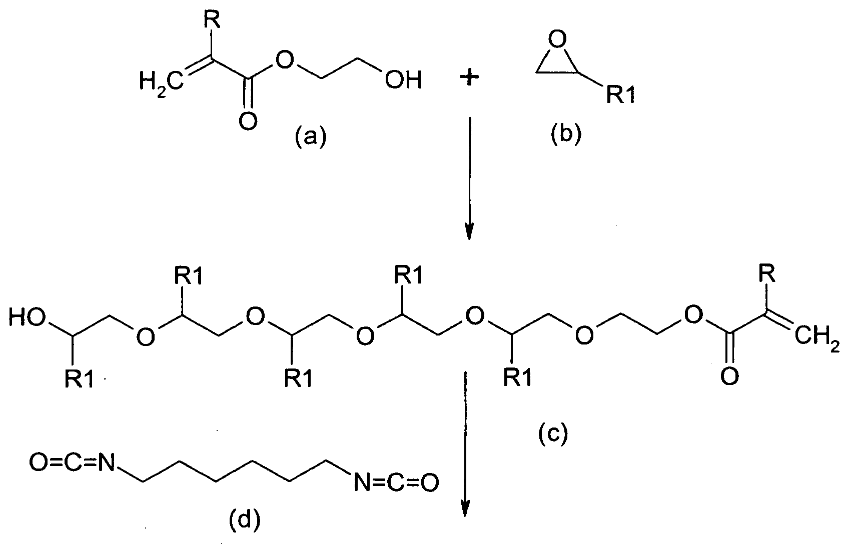

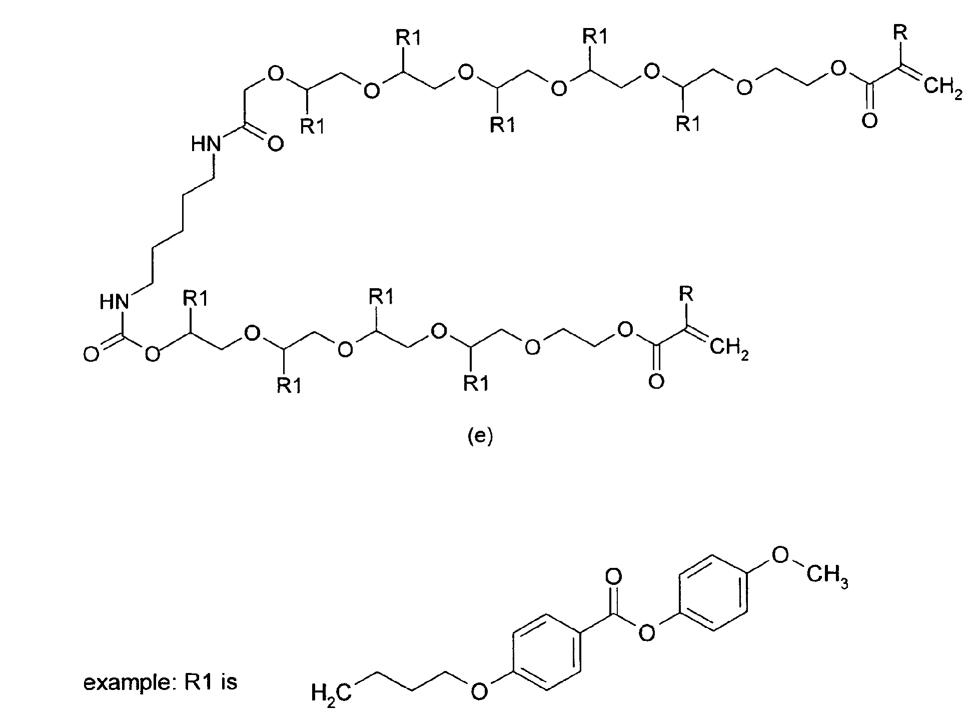

First a prepolymer (mono-hydroxy (meth)acrylate) is synthesized by reaction of a hydroxyl-(meth)acrylate with a mesogenic epoxy monomer. This so called "activated monomer mechanism" may be catalyzed by boron trifluoride diethyl etherate. In the second step the hydroxyl end-groups of the prepolymer are reacted with polyisocyanates (functionality 2 or more); two or more prepolymer chains are connected to the polyisocyanate molecule by a urethane group and a UV crosslinkable liquid crystalline polymer (LCP) is obtained. Examples of hydroxy(meth)acryaltes are:
ethoxylated (meth)acrylates: R=H or CH₃, n=1-10

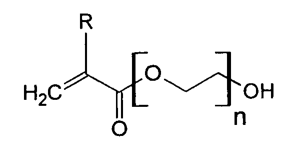

| R | n | name | Mol. weight | Manuf. |
|---|---|---|---|---|
| H | 1 | HEA (hydroxyethyl acrylate) | 116 | Cognis |
| | 6 | Bisomer PEA6 | 336 | Cognis |
| CH₃ | 1 | HEMA (hydroxyethyl methacrylate) | 130 | Cognis |
| | 3 | Bisomer PEM3 | 218 | Cognis |
| | 5 | HEMA-5 | 306 | Bimax |
| | 6 | Bisomer PEM6 LD | 350 | Cognis |
| | 10 | HEMA-10 | 526 | Bimax |

propoxylated (meth)acrylates: R=H or -CH₃, n=1-10

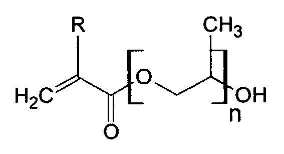

| R | n | name | Mol. weight | Manuf. |
|---|---|---|---|---|
| H | 1 | HPA (hydroxypropyl acrylate) | 130 | Cognis |
| | 6 | Bisomer PPA6 | 420 | Cognis |
| CH₃ | 1 | HPMA (hydroxypropyl methacrylate) | 144 | Cognis |
| | 5 | Bisomer PPM5S | 376 | Cognis |

ethoxylated/propoxylated methacrylates: m=1-10, n=1-10 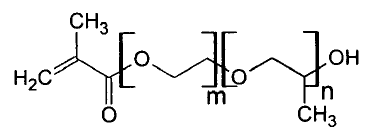 m=6, n=3: Bisomer PEM63P (Cognis; mol. weight=524)
propoxylated/ethoxylated methacrylates: m=1-10, n=1-10 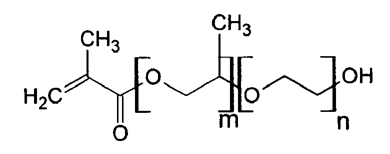 m=6, n=3: Bisomer PPM63E (Cognis; mol. weight=572)
butanediol mono-acrylate: BASF (mol. weight=144) 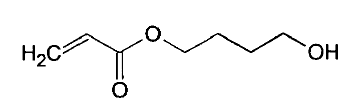
caprolactone modified HE(M)A: R=H or -CH₃, n=1-10

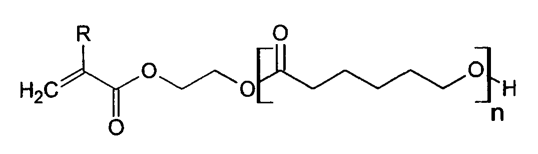

| R | n | name | Mol. weight | Manuf. |
|---|---|---|---|---|
| H | 1 | Tone M-101 | 230 | Dow |
| | 2 | Tone M-100 | 344 | Dow |
| | 3 | Placcel FA-3 | 458 | Daicel |
| | 4 | Placcel FA-4 | 572 | Daicel |
| | 5 | Placcel FA-5 | 686 | Daicel |
| | 10 | Placcel FA-10 | 1256 | Daicel |
| CH₃ | 1 | Tone M-201 | 244 | Dow |
| | 2 | Placcel FM-2 | 358 | Daicel |
| | 3 | Placcel FM-3 | 472 | Daicel |
| | 4 | Placcel FM-4 | 586 | Daicel |
| | 5 | Placcel FM-5 | 700 | Daicel |

The UV-curable urethane-(meth)acrylate polymer has the formula:

H₂C=C(R)-CO-O-X-O-CO-NH-Y-NH-CO-O-X-O-CO-(R)C=CH₂

wherein:
R is independently H or CH₃;
X is independently a linker group containing at least one LC side chain;
Y is a linker group.

Preferably the UV-curable urethane-(meth)acrylate polymer has the above formula wherein:
X is independently a polyglycolic linker having the formula

   - (O-(CH₂)ₘ-CHR³)ₓ-(OCO-(CH₂)ₚ-CHR⁵)_{q}-(OCHR¹-CHR²)ₙ

   wherein R¹, R², R³, R⁴, and R⁵ are independently H, CH₃, or an LC moiety, at least one of R¹ and R² being an LC moiety;
   m and n are independently an integer from 1 to 10;
   p is an integer from 2 to 4;
   x and q are independently an integer from 0 to 5.

This polyisocyanate compound contains the moiety "Y", which preferably is a hydrocarbon linker group selected from alkylene, alkenylene, arylene, and alkylenearylene which may be branched or unbranched, and which may contain cycloalkylene and/or cycloalkenylene moieties.

### Examples are:

aliphatic diisocyanates

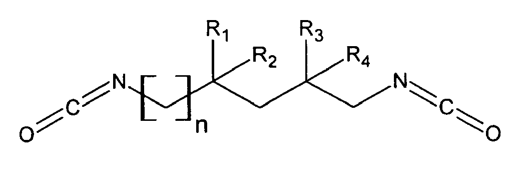

| n | R | name | Mol. weight | Manuf. |
|---|---|---|---|---|
| 0 | R₁-R₄=H | 1,4-diisocyanato butane | 140 | |
| 2 | R₁-R₄=H | Hexamethylene diisocyanate (HDI)¹⁾ | 168 | Bayer |
| 4 | R₁-R₄=H | Octamethylene diisocyanate | 196 | |
| 8 | R₁-R₄=H | 1,12-diisocyanato dodecane | 252 | |
| 1 | R₁=CH₃; R₂-R₄=H | 1,5-diisocyanato-2-methyl-pentane | 168 | |
| 2 | R₁-R₃=CH₃; R₄=H R₁=H; R₂-R₄=CH₃ | 2,4,4-trimethyl hexamethylene diisocyanate 2,2,4-trimethyl hexamethylene diisocyanate | 210 (1:1 mix of 2 isomers)² | Degussa |

| | | | | |
|---|---|---|---|---|
| ¹⁾ Desmodur H ²⁾ Vestanat TMDI | | | | |

aliphatic cyclic diisocyanates; IPDI and H₁₂MDI 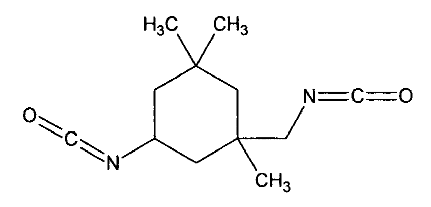 IPDI: isophoron diisocyanate/Desmodur I, (mol. weight=222) 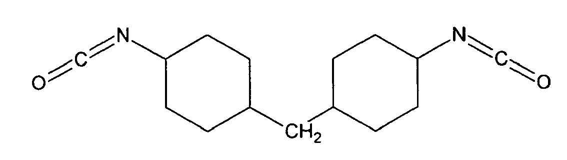 H₁₂MDI: dicyclohexylmethane-4,4'-diisocyanate / Desmodur W, mixture of cis/trans isomers (mol. weight=262)

### Aliphatic polyisocyanates based on oligomeric structures of HDI and IPDI:

There are many materials available with different oligomeric addition products of both HDI and IPDI. Depending on reaction conditions these products may have a dimeric structure (urethdione) or trimeric structures (biuret, isocyanurate, and the asymmetric cyclic trimeric structure iminooxadiazindione).

There are also several manufacturers who have extensive lists of these kind of products e.g Bayer (Desmodur®), BASF (Basonat®) and Rhodia (Tolonate®). The following are examples only

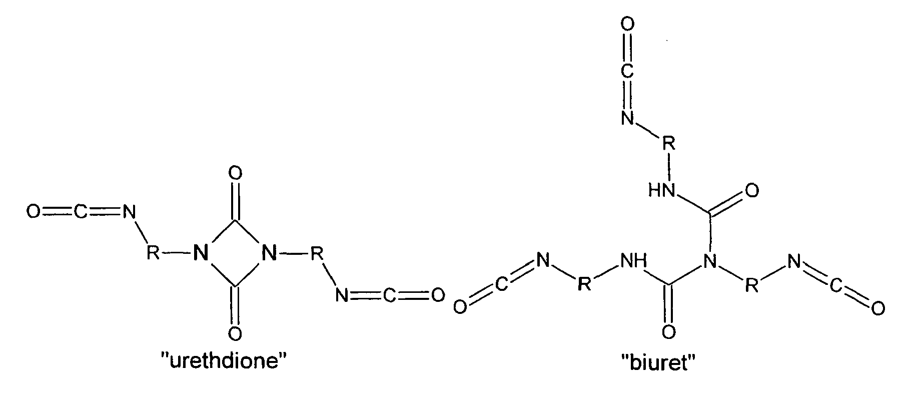

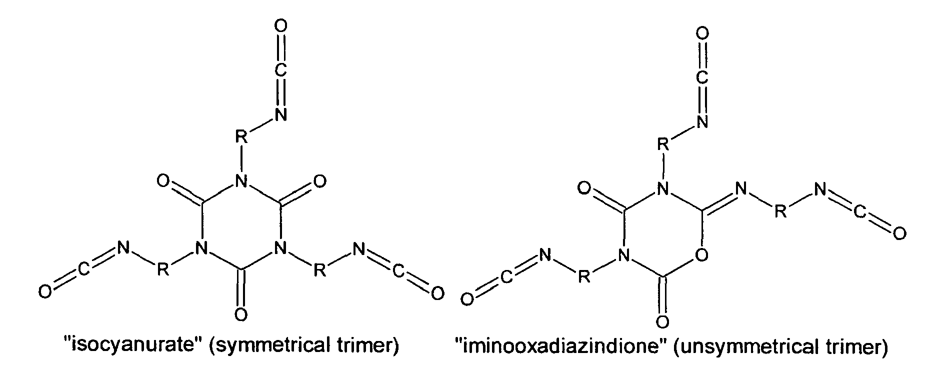

| Desmodur® | type | %wt. | NCO (%) | Visc. (mPa.s 23° C) | NCO funct.¹⁾ | Equiv. Weight²⁾ |
|---|---|---|---|---|---|---|
| H | HDI | 100 | 50.0 | 3 | 2.0 | 84 |
| I | IPDI | 100 | 37.8 | 10 | 2.0 | 111 |
| W | H12MDI | 100 | 32.0 | solid (mp. 23° C) | 2.0 | 131 |
| N100 | HDI-biuret | 100 | 22.0 | 10.000 | 3.8 | 191 |
| N3200 | HDI-biuret | 100 | 23.0 | 2.500 | 3.5 | 183 |
| N3790 BA ³⁾ | HDI-isocyanurate | 90 | 18.0 | 2.000 | 4.1 | 236 |
| N3300 | HDI-isocyanurate | 100 | 21.8 | 3.000 | 3.5 | 193 |
| N3600 | HDI-isocyanurate | 100 | 23.0 | 1.200 | 3.2 | 180 |
| N3400 | HDI-urethdione | 100 | 21.8 | 170 | 2.5 | 193 |
| XP2410 | HDI-unsymm.trimer | 100 | 24.0 | 700 | 3.1 | 175 |
| NZ1 | HDI-IPDI combination | 100 | 20 | 3.000 | 2.8 | 210 |
| Z4470 BA | IPDI-isocyanurate | 70 | 11.9 | 600 | 3.3 | 360 |

| | | | | | | |
|---|---|---|---|---|---|---|
| ¹⁾ number of isocyanate groups per molecule ²⁾ molecular weight of 1 equivalent of NCO = 42 / % NCO ³⁾ BA= butylacetate | | | | | | |

Apart from the above aliphatic polyisocyanates also aromatic di/polyisocyanates can be used. The structures of the most common materials are given below.
PPDI: p-phenylene diisocyanate (mp.= 96° C; mol. weight=160) 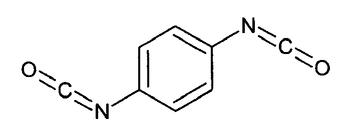 2,4-TDI / 2,6-TDI: toluene-2,4-diisocyanate (mp.= 22° C) and toluene-2,6-diisocyanate (mp.= 18° C; mol. weight=174) 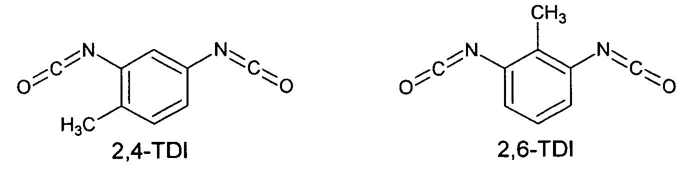 Also mixtures of these materials are available:
[65/35] (2,4-TDI/2,6-TDI): mp.= 5° C
[80/20] (2,4-TDI/2,6-TDI): mp.= 18° C
Diisocyanates based on diphenylmethane: MDI (mol. weight=250)

| 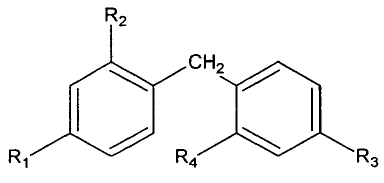 | | | |
|---|---|---|---|
| Substitution: | | | |
| | -H | -N=C=O | mp. (° C) |
| 4,4' | R2, R4 | R1, R3 | 39.5 |
| 2,4' | R1, R4 | R2, R3 | 34.5 |
| 2,2' | R1, R3 | R2, R4 | 46.5 |

NDI: naphthalene-1,5-diisocyanate (mp.= 127° C; mol. weight=210) 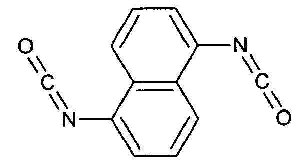 m-TMXDI: m-tetramethylxylene diisocyanate (mol. weight=244) 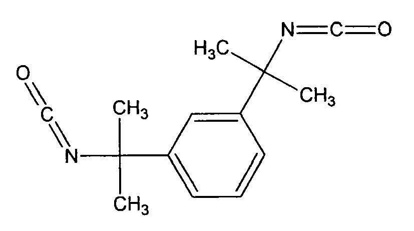 Triphenylmethane-4,4',4"-triisocyanate (mp.= 91° C; mol. weight=367)

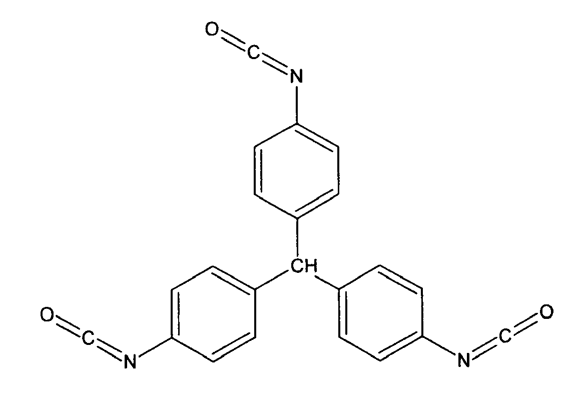

The UV-curable urethane-(meth)acrylate polymer most preferably has the above given formula wherein:
R is CH₃;
R¹, R³ and R⁴ are H;
R² is an LC moiety;
n is 3-8; and
Y is - (CH₂)ₘ-.

The invention also pertain to a method for preparing the above UV-curable urethane-(meth)acrylate polymer comprising the steps:
a) reacting a hydroxy-functional (meth)acrylic ester of the formula:

   H₂C=C(R)-CO-O -(CHR³-CHR⁴)-(O-CHR¹-CHR²-)ₙ-OH

   with
b) an isocyanate of the formula O=C=N-Y-N=C=O; wherein R, R¹-R⁴, and Y have the previously given meanings.

The hydroxy-functional (meth)acrylic ester is preferably obtained by reacting
a) a hydroxy-functional (meth)acrylic ester of the formula:

   H₂C=C(R)-CO-O-CHR³-CHR⁴-OH

   with
b) an epoxy-functional LC moiety of the formula C₂H₃O-LC,
wherein C₂H₃O represent an epoxy group and LC a liquid crystalline group.

The LC moieties are known, for instance from EP 868680. Suitable mesogenic group-containing mono-epoxides are for instance those satisfying the formulae below: 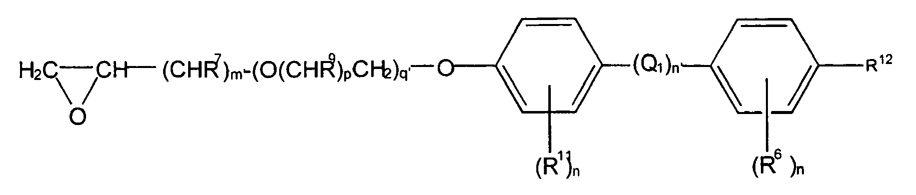 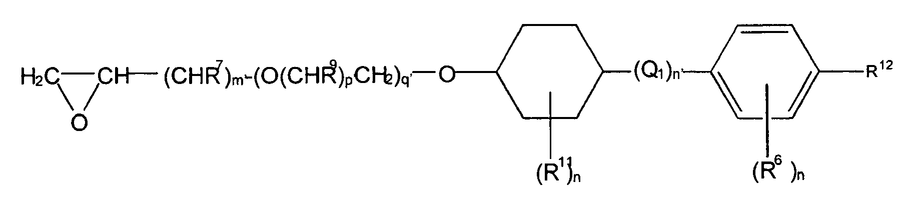 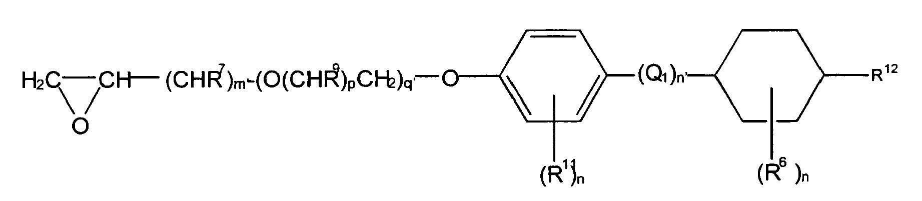 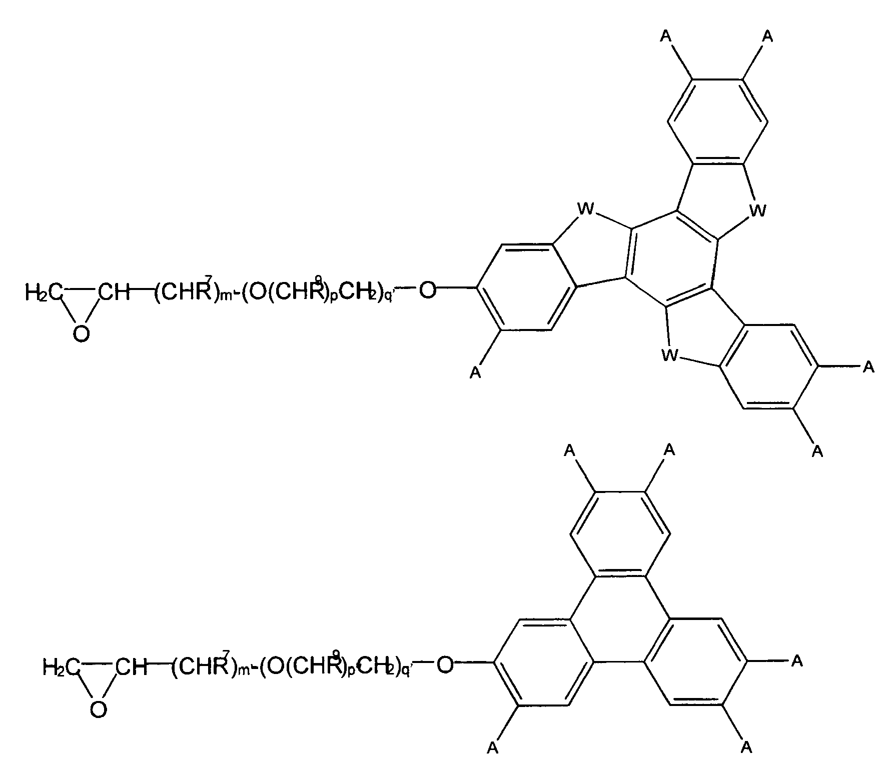 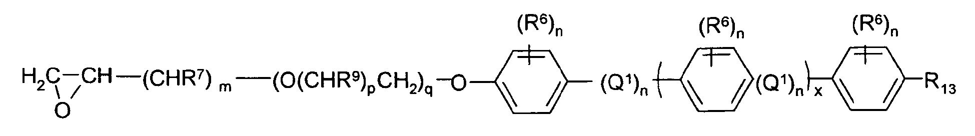 wherein
Q¹ stands for -C(O)-O-, -C=C-, -O-C(O)-, -N=C-, -C=N-, -C≡C-, -N=N-, or -N(→O)=N-;
W stands for C, O, or S,
A stands for 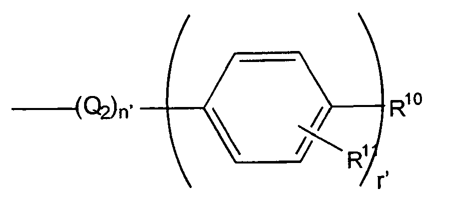 Q² stands for -O-C(O)-, -O-, or -O-C(O)-C=C-,
R¹² stands for -O-R⁸, -COO-R⁸, -OCO-R⁸, -NO₂, -CN, -HC=C(CN)₂, -C(CN)=C(CN)₂, or -R⁸,
R¹³ stands for H, phenyl or R¹²,
R¹⁴ stands for O-alkyl having 1-5 carbon atoms or R⁶,
R¹¹ stands for an alkyl group having 1-5 carbon atoms,
R⁶ stands for an alkyl group having 1-5 carbon atoms,
R⁷ stands for H or CH₃,
p' is 1-7,
m' is 0-12 with the proviso that compounds having an oxygen atom in the α or β position vis-à-vis the oxygen of the epoxy group (vicinal or geminal) are excluded,
n' is 0 or 1,
n is 0, 1, or 2,
q' is 0-3, with the proviso that q ≠ 0 when m =0,
r' is 0 or 1,
x is 0-4,
R⁸ stands for an alkyl group having 1-15 carbon atoms,
R⁹ stands for H or an alkyl group having 1-15 carbon atoms, and
R¹⁰ stands for an alkyl of alkoxy group having 1-20 carbon atoms.

Among the epoxides according to the formulae given above, the ones with spacers (thus, m and/or q is not 0) are preferred. Of course, it is also possible to employ mixtures of different mono-epoxides and OH-containing compounds in the monomer mixture. This can be done to adapt the dispersion of the retardation layer to the dispersion of the active cell. It is possible to employ up to 40% of non-mesogenic mono-epoxides, for instance oxiranylmethane, in the monomer mixture.

It also possible to use blends of high-molecular weight liquid crystalline material in order to satisfy the Tc and viscosity requirements.

The invention is further illustrated by the following non-limitative examples.

The following LC moieties A and B were used:
(A) 4-methoxyphenyl-4'-(5,6-epoxyhexyloxy)benzoate (mol. weight=342) 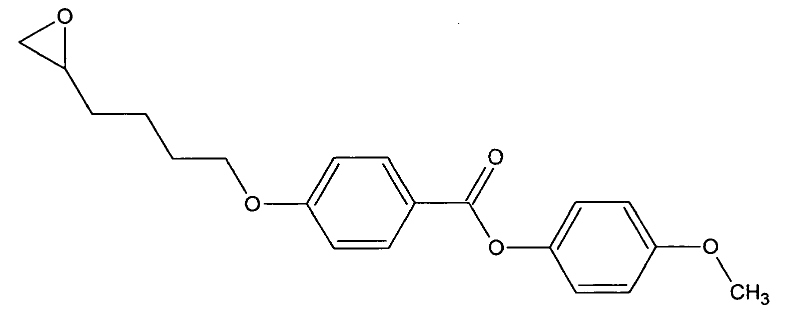
(B) biphenyl-(3-methoxyphenylbenzoate)-4-(5,6-epoxy-hexyloxy)benzoate (mol. weight=538)

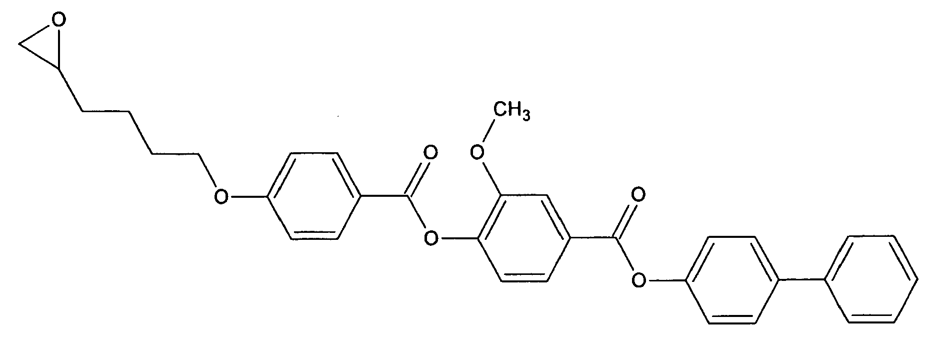

### Example 1

### General description of the synthesis of the pre-polymer

### LCP's based on epoxy (A):

To a solution of 2.88 g (20 mmole) of butandiol monoacrylate in 26 g of m-xylene were added 200 µl of boron trifluoride diethyl etherate at 25° C. Separately the epoxy solution was prepared by dissolving 41.04 g of epoxy (A) (120 mmole) in 38 g of m-xylene at 55/60° C in a double walled addition funnel. The temperature of the epoxy solution was kept at 55/60° C to prevent crystallization of the monomer. After stirring the acrylate/boron solution for 15 minutes, the warm solution of the epoxy monomer was slowly added to the acrylate solution in 2-3 hours thereby keeping the reaction temperature at about 25° C. After complete addition of the epoxy compound, the solution was stirred for 20 hours at 25° C. Finally, the boron catalyst was removed by adding 1.2 g (2.5 wt.%) of calcium oxide, stirring for 2 hours at 25° C and filtration of the LCP solution over a 0.2 µm filter.

### LCP's based on epoxy (B):

The synthesis is comparable to that of epoxy (A) but dichloromethane (DCM) was used as solvent instead of m-xylene. Epoxy (B) is soluble in DCM (< 15 wt.%) at room temperature.

To a solution of 5.72 g (10 mmole) of Bisomer PPM63E in 22.9 g of DCM were added 100 µl of boron trifluoride diethyl etherate at 25° C. After stirring for 15 minutes a solution of 15.10 g (28.06 mmole) of epoxy (B) in 106 g of DCM were slowly added to the acrylate solution in 2-3 hours at a reaction temperature of 25° C. After complete addition of the epoxy compound the solution was stirred for 20 hours at 25° C. Finally, the boron catalyst was removed by adding 0.53 g (2.5 wt.%) of calcium oxide, stirring for 2 hours at 25° C and filtration of the LCP solution over a 0.2 µm filter. The DCM solvent was removed by evaporation and the LCP dissolved in m-xylene (40-42 wt.% solution). The clear LCP solution was used without further purification in the next reaction step with polyisocyanate.

### Examples of synthesized pre-polymers

| | | | Mol weight | Ratio (mmole) | | wt.% m-xylene |
|---|---|---|---|---|---|---|
| LCP | Epoxy | Hydroxyacrylate | | acrylate | epoxy | |
| A1 | A | Butanediol acrylate¹⁾ | 144 | 20 | 120 | 40.8 |
| A2 | A | Butanediol acrylate | 144 | 50 | 325 | 40.4 |
| A3 | A | Hydroxyethyl methacrylate²⁾ | 130 | 60 | 450 | 41.6 |
| B1 | B | Tone M100³⁾ | 344 | 11 | 27.5 | 41.6⁵⁾ |
| B2 | B | Bisomer PPM63E⁴⁾ | 572 | 10 | 28.06 | 39.7 |

| | | | | | | |
|---|---|---|---|---|---|---|
| ¹⁾ ex BASF ²⁾ HEMA (ex Degussa) ³⁾ HEMA with 2 units of caprolactone (ex Dow) ⁴⁾ polyalkyleneglycol monomethacrylate having 6 units of propyleneglycol and terminal ethyleneglycol groups (3x) (ex Cognis) ⁵⁾ solution in anisole | | | | | | |

### Example 2

### General description of the synthesis of urethane-acrylate LCP's

To 30.00 g of a 40.4 wt.% solution of pre-polymer A2 in m-xylene were added 108 mg of HDI (hexamethylene diisocyanate; Desmodur® H) and 72 µl of a 10 wt.% solution of DBTDL (dibutyltin dilaurate) in m-xylene. The solution was stirred under dry air and heated to 60° C in a pre-heated oil bath for 20 hours. After cooling to room temperature the LCP's were used in the processing of optical films without further purification.

### Example 3

### General procedure for making twisted retarders of the urethane-(meth)acrylate LCP's

To a 40-42 wt.% LCP solution in m-xylene were added 0.2-0.3 wt.% of chiral dopant S1011 (ex Merck), 0.5 wt.% of Lucirin® TPO (photoinitiator, ex BASF) and 0.1 wt.% of EFKA® 3299 (flow modifier EFKA). The solution was filtered over a 0.2 µm filter and spin-coated on a 80 µm cellulose triacetate film, supplied with rubbed orientation layer. The films were dried and subsequently annealed for 10-120 minutes at 60-80° C to form the twisted structure. Finally, the twisted structure was fixed by photopolymerization under nitrogen (1.5 minutes at 60-80° C; lamps TL-K 40W/10R, 10 mW/cm², λ=365 nm). After UV curing the samples were cooled to 25° C (Mettler Toledo hot stage: FP82HT, equipped with Central processor FP90) and the twisting angle (Φ°) and retardation (R) value (R=d*Δn @ λ=550 nm; d=thickness of the film and An =birefringence of LCP) were measured with an optical evaluation system (Otsuka RETS-1100, ex Otsuka Electronics Corporation, Ltd., Japan). The value of the clearing temperature (T_{c-EMs}) was determined by fitting the experimental birefringence values (for λ=550 nm) as a function of temperature (25-90° C, Mettler hot stage) to the EMS-equation (Extended Maier Saupe).

### Examples of urethane-(meth)acrylate LCP's and twisted retarders thereof

| | Poly-isocyanate | | annealing | | Retarder properties | | |
|---|---|---|---|---|---|---|---|
| Pre-polymer | type | wt.% | T (°C) | t (min) | Φ (°) | R_{25° C} (nm) | T c-EMS (° C) |
| A1 | Desmodur H | 3.68 | 78 | 15 | -196 | 924 | 98.0 |
| A2 | Desmodur H | 0.35 | 78 | 12 | -158 | 891 | 110.0 |
| | Desmodur H | 0.88 | 78 | 10 | -151 | 844 | 108.5 |
| | Desmodur H | 1.74 | 78 | 15 | -158 | 840 | 106.2 |
| | Desmodur H | 2.61 | 78 | 15 | -162 | 885 | 103.2 |
| | Desmodur I | 1.62 | 78 | 20 | -163 | 856 | 101.8 |
| | Desmodur I | 3.40 | 75 | 30 | -210 | 897 | 90.9 |
| | Desmodur N3400 | 4.07 | 75 | 15 | -197 | 911 | 97.9 |
| A3 | Desmodur H | 2.14 | 78 | 30 | -189 | 953 | 111.7 |
| | Desmodur N3400 | 1.42 | 78 | 25 | -185 | 893 | 113.3 |
| | Desmodur N3400 | 1.78 | 80 | 10 | -188 | 945 | 112.8 |
| | Desmodur N3600 | 1.34 | 80 | 30 | -182 | 938 | 115.2 |
| | Desmodur N3600 | 2.09 | 78 | 12 | -183 | 909 | 110.0 |
| | Desmodur N3600 | 3.43 | 80 | 15 | -181 | 980 | 103.7 |
| | Desmodur Z4470BA | 1.83 | 80 | 12 | -142 | 885 | 108.4 |
| | Desmodur Z4470BA | 3.21 | 75 | 15 | -153 | 890 | 101.5 |
| B1 | Desmodur N3400 | 2.89 | 80 | 10 | -113 | 960 | 151.9 |
| B2 | Desmodur N3400 | 1.92 | 60 | 120 | -139 | 932 | 122.0 |

## Claims

1. A UV-curable urethane-(meth)acrylate polymer having the formula:
H₂C=C(R)-CO-O-X-O-CO-NH-Y-NH-CO-O-X-O-CO-(R)C=CH₂
wherein:
R is independently H or CH₃;
X is independently a linker group containing at least one LC side chain;
Y is a linker group.

2. The UV-curable urethane-(meth)acrylate polymer of claim 1, wherein:
X is independently a polyglycolic linker having the formula
-(O-(CH₂)ₘ-CHR³)ₓ-(OCO- (CH₂)ₚ-CHR⁵)_{q}-(OCHR¹-CHR²)ₙ
wherein R¹, R², R³, R⁴, and R⁵ are independently H, CH₃, or an LC moiety, at least one of R¹ and R² being an LC moiety;
m and n are independently an integer from 1 to 10;
p is an integer from 2 to 4;
x and q are independently an integer from 0 to 5.

3. The UV-curable urethane-(meth)acrylate polymer of claim 1 or 2, wherein:
Y is a hydrocarbon linker group selected from alkylene, alkenylene, arylene, and alkylenearylene which may be branched or unbranched, and which may contain cycloalkylene and/or
cycloalkenylene moieties.

4. The UV-curable urethane-(meth)acrylate polymer of claim 3, wherein
R is CH₃;
R¹, R³ and R⁴ are H;
R² is an LC moiety;
n is 3-8; and
Y is -(CH₂)ₘ-.

5. A method for preparing the UV-curable urethane-(meth)acrylate polymer of any one of claims 1-4 comprising the steps:
a) reacting a hydroxy-functional (meth)acrylic ester of the formula:
H₂C=C(R)-CO-O-CHR-(CHR³-CHR⁴)-(O-CHR¹-CHR²-)ₙ-OH
with
b) an isocyanate of the formula O=C=N-Y-N=C=O; wherein
R, R¹-R⁴, and Y have the previously given meanings.

6. The method for preparing the UV-curable urethane-(meth)acrylate polymer according to claim 5 wherein the hydroxy-functional (meth)acrylic ester is obtained by reacting
a) a hydroxy-functional (meth)acrylic ester of the formula:
H₂C=C(R)-CO-O-CHR³-CHR⁴-OH
with
b) an epoxy-functional LC moiety of the formula
C₂H₃O-LC, wherein C₂H₃O represent an epoxy group and LC a liquid crystalline group.

7. An optical film comprising the UV-curable urethane-(meth)acrylate polymer of any one of claims 1-4.

8. A display comprising the optical film of claim 7.

## Patentansprüche

1. UV-vernetzbares Urethan-(Meth-)Acrylat-Polymer mit der Formel:
H₂C=C(R)-CO-O-X-O-CO-NH-Y-NH-CO-O-X-O-CO-(R)C=CH₂,
wobei
- R unabhängig voneinander H oder CH₃ ist;
- X unabhängig voneinander eine Linkergruppe ist, die mindestens eine Flüssigkristall-Seitenkette enthält;
- Y eine Linkergruppe ist.

2. UV-vernetzbares Urethan-(Meth-)Acrylat-Polymer nach Anspruch 1, wobei
- X unabhängig voneinander eine Polyglykol-Linkergruppe ist mit der Formel
- (O-(CH₂)ₘ-CHR³)ₓ-(OCO-(CH₂)ₚ-(HR⁵)_{q}-(OCHR¹-CHR²)ₘ wobei
- R¹, R², R³, R⁴, und R⁵ unabhängig voneinander H, CH₃ oder ein Flüssigkristall-Rest sind, wobei mindestens einer von R¹ und R² ein Flüssigkristall-Rest ist;
- m und n unabhängig voneinander ganze Zahlen von 1 bis 10 sind;
- p eine ganze Zahl von 2 bis 4 ist;
- x und q unabhängig voneinander ganze Zahlen von 0 bis 5 sind.

3. UV-vernetzbares Urethan-(Meth)Acrylat-Polymer nach Anspruch 1 oder 2, wobei Y eine Hydrokarbon-Linkergruppe ist, ausgewählt aus Alkylen, Alkenylen, Arylen und Alkylenarylen, die verzweigt oder unverzweigt sein und Zykloalkylen-Reste und/oder Zykloalkenylen-Reste enthalten kann.

4. UV-vernetzbares Urethan-(Meth)Acrylat-Polymer nach Anspruch 3, wobei gilt:
- R ist CH₃;
- R¹, R³ und R⁴ sind H;
- R² ist ein Flüssigkristall-Rest;
- n ist 3 bis 8; und
- Y ist -(CH₂)ₘ -.

5. Verfahren zur Herstellung eines UV-vernetzbaren Urethan-(Meth)Acrylat-Polymers nach einem der Ansprüche 1 bis 4, enthaltend den Schritt [die Schritte:]
a) Reaktion eines hydroxyfunktionellen (Meth)acryl-Esters der Formel:
H₂C=C(R)-CO-O-(CHR³-CHR⁴)-(O-CHR¹-CHR²-)ₙ-OH mit
b) einem Isocyanat der Formel:
O=C=N-Y-N=C=O,
wobei R, R¹-R⁴ und Y die vorstehend angegebenen Bedeutungen haben.

6. Verfahren zur Herstellung des UV-vernetzbaren Urethan-(Meth)Acrylat-Polymers nach Anspruch 5, wobei der hydroxyfunktionelle (Meth)Acryl-Ester erhalten wird durch eine Reaktion
a) eines hydroxyfunktionellen (Meth)Acryl-Esters der Formel:
H₂C=C(R)-CO-O-CHR³-CHR⁴-OH mit
b) einem epoxyfunktionellen Flüssigkristall-Rest der Formel
C₂H₃O-LC,
wobei C₂H₃O eine Epoxy-Gruppe und LC eine Flüssigkristall-Gruppe sind.

7. Optische Schicht beinhaltend das UV-vernetzbare Urethan-(Meth)Acrylat-Polymer nach einem der Ansprüche 1 bis 4.

8. Display enthaltend eine optische Schicht nach Anspruch 7.

## Revendications

1. Polymère uréthane-(méth)acrylate durcissant aux UV dont la formule est :
H₂C=C(R)-CO-O-X-O-CO-NH-Y-NH-CO-O-X-O-CO-(R)C=CH₂
où:
R est indépendamment H ou CH₃;
X est indépendamment un groupe de liaison contenant au moins une chaîne latérale à cristaux liquides (CL) ;
Y est un groupe de liaison.

2. Polymère uréthane-(méth)acrylate durcissant aux UV selon la revendication 1, où :
X est indépendamment un groupe de liaison polyglycolique dont la formule est
- (O-(CH₂)ₘ-CHR³)ₓ- (OCO-(CH₂)ₚ-CHR⁵)_{q}-(OCHR¹-CHR²)ₙ
où R¹, R², R³, R⁴, et R⁵ sont indépendamment H, CH₃, ou un groupement CL, au moins un parmi R¹ et R² étant un groupement CL ;
m et n sont indépendamment un entier de 1 à 10 ;
p est un entier de 2 à 4 ;
x et q sont indépendamment un entier de 0 à 5.

3. Polymère uréthane-(méth)acrylate durcissant aux UV selon la revendication 1 ou 2, dans lequel :
Y est un groupe de liaison hydrocarboné sélectionné parmi un alcoylène, un alcénylène, un arylène et un alcoylène-arylène qui peut être ramifié ou non ramifié, et qui peut contenir des groupements cycloalcoylène et/ou cycloalcénylène.

4. Polymère uréthane-(méth)acrylate durcissant aux UV selon la revendication 3, dans lequel
R est CH₃ ;
R¹, R³ et R⁹ sont H ;
R² est un groupement CL ;
n est 3 à 8 ; et
Y est -(CH₂)ₘ-.

5. Procédé de préparation du polymère uréthane-(méth)acrylate durcissant aux UV selon l'une quelconque des revendications 1 à 4 comprenant les étapes :
a) de mise en réaction d'un ester (méth)acrylique hydroxy-fonctionnel de la formule :
H₂C=C (R) -CO-O- (CHR³-CHR⁴)-(O-CHR¹-CHR²-)ₙ-OH avec
b) un isocyanate de la formule O=C=N-Y-N=C=O ; où
R, R¹-R⁴, et Y ont les significations données précédemment.

6. Procédé de préparation du polymère uréthane-(méth)acrylate durcissant aux UV selon la revendication 5, où l'ester (méth)acrylique hydroxy-fonctionnel est obtenu par mise en réaction
a) d'un ester (méth)acrylique hydroxy-fonctionnel de la formule H₂C=C(R)-CO-O-CHR³-CHR⁴-OH avec
b) un groupement CL epoxy-fonctionnel de la formule C₂H₃O-CL, où C₂H₃O représente un groupe epoxy et CL représente un groupement à cristaux liquides.

7. Film optique comprenant le polymère uréthane-(méth)acrylate durcissant aux UV selon l'une quelconque des revendications 1 à 4.

8. Afficheur comprenant un film optique selon la revendication 7.
